# EUROPÄISCHE PATENTSCHRIFT

(11) **EP 1 340 655 B1**
(45) Veröffentlichungstag und Bekanntmachung des Hinweises auf die Patenterteilung: **30.06.2004**
(21) Anmeldenummer: 02003929.3
(22) Anmeldetag: 21.02.2002
(51) Int. Cl.: B60R 21/13

(54) **Schutzvorrichtung eines PKW-Cabriolets**
Protection device for a cabriolet
Dispositif de protection pour un cabriolet

(43) Veröffentlichungstag der Anmeldung: 03.09.2003
(73) Patentinhaber: ISE Innomotive Systems Europe GmbH, 51702 Bergneustadt (DE); DaimlerChrysler AG, 70546 Stuttgart (DE)
(72) Erfinder: Müller, Hartwig, Dr.-Ing., 09126 Chemnitz (DE)
(74) Vertreter: Grünecker, Kinkeldey, Stockmair & Schwanhäusser Anwaltssozietät

(56) Entgegenhaltungen:
- EP-A- 1 028 050
- EP-A- 1 038 735
- EP-A- 1 084 914
- DE-C- 10 044 926
- DE-U- 20 103 001
- US-A- 5 626 361
- US-A- 5 671 947
- US-A- 5 881 458

## Beschreibung

Die Erfindung betrifft eine Schutzvorrichtung der im Oberbegriff des Patentanspruchs 1 angegebenen Art.

Gemäß DE-U-201 03 001 (PCT/EP01/06515) steift der Modulträger aus Faserverbund-Kunststoff in der Baueinheit der Schutzvorrichtung den Fahrzeugkörper und die Querwand so aus, dass eine einzige Querwand ausreicht und durch die Materialauswahl erheblich Gewicht gegenüber einer herkömmlichen Blechbauweise eingespart wird. Nach herkömmlicher Blech-Bauweise werden nämlich meist zwei separierte Querwände vorgesehen, zwischen denen die Baueinheit eingesetzt wird. Der Modulträger als hauptsächliches Kraftübertragungsglied wird jedoch im Crashfall nicht nur auf Biegung, sondern auch auf Torsion beansprucht, und muss deshalb sehr stabil sein.

Die Sicherheitsvorrichtung gemäß US 5 671 947 A enthält eine vorgefertigte Metallkassette mit einem ausfahrbaren Überrollbügel und dessen Betätigungsmechanismus. Die Kassette wird nur an einem Leichtmetall-Querwand-Rahmen montiert, der an zwei seitlich auf Bodenschienen des Fahrzeugkörpers befestigten Blöcken montiert ist. Zusätzlich erstrecken sich zwei seitliche Rohrstreben von den oberen Rahmenecken zum Fahrzeugboden. Die Sicherheitsvorrichtung ist vielteilig und schwer.

Die Sicherheitsvorrichtung gemäß DE 41 00 506 A enthält einen stabilen metallischen Führungsrahmen, der die Überrollbügel aufnimmt und durch Abdeckungen für Unterteile der Überrollbügel und deren Antriebs- und Steuermechanismus ergänzt wird. Der Führungsrahmen wird an eine Querwand angebaut und seitlich im Fahrzeugkörper fest verschraubt. Zwischen dem Fahrzeugkörper-Boden und dem Führungsrahmen sind zur Entkopplung nachgiebige Gummilager vorgesehen. Daraus resultiert unerwünscht hohes Gewicht für die Sicherheitsvorrichtung, und werden bei einem Überschlag überwiegend Kräfte nur seitlich in den Fahrzeugkörper eingeleitet.

Gemäß EP 10 28 050 A bildet eine auch als eine Querwand im Fahrzeug-Körper dienende Grundplatte der Baueinheit ein hauptsächliches Tragelement der Sicherheitsvorrichtung. Die Grundplatte ist im oberen Bereich und im unteren Bereich jeweils als querverlaufender, hohler Profilträger ausgebildet. Die am oberen Profilträger an der Vorderseite (in Fahrzeugfahrtrichtung) der Grundplatte geführten Überrollbügel werden am oberen Profilträger von je einem Verstärkungsblock umfasst. Jeder Verstärkungsblock ist durch eine schräge Abdeckwand nach unten verlängert, deren unteres Ende am unteren Profilträger der Grundplatte befestigt wird, in dem auch Führungselemente der Überrollbügel von oben eingreifen. Alle Komponenten der Baueinheit sind Leichtmetall-Strangpressprofile. Daraus resultiert hohes Gewicht. Der Fahrzeugboden wird nicht zur Kraftaufnahme herangezogen.

Weiterer Stand der Technik ist zu finden in: EP 1 084 914 A, US 5 626 361 A, DE 100 44 926 C, US 5 881 458 A, EP 1 038 735 A.

Der Erfindung liegt die Aufgabe zugrunde, eine Sicherheitsvorrichtung der eingangs genannten Art zu schaffen, bei der es möglich ist, gegenüber der bekannten Sicherheitsvorrichtung gemäß DE-U-201 03 001 unter Beibehalt des hohen Sicherheitsstandards für einen Überschlag-Crash weiter Gewicht einzusparen.

Die gestellte Aufgabe wird erfindungsgemäß mit den Merkmalen des Anspruchs 1 gelöst.

Da sich in dem Überrollsystem der Profilträger bei einem Überschlag-Crash zusätzlich durch wenigstens ein Kraftübertragungselement direkt gegen den Fahrzeugkörper-Boden kraftübertragend abstützt, unterliegt der Modulträger keiner nennenswerten Torsionsbefastung mehr. Die an sich vom Profilträger unter Torsion aufzunehmenden Belastungen werden vielmehr über den Kraftübertragungsteil direkt in den Fahrzeugkörper-Boden eingeleitet. Der Modulträger lässt sich graziler ausbilden, wodurch mehr Gewicht einzusparen ist, als das zusätzliche Gewicht des wenigstens einen Kraftübertragungsteils. Dazu kommt, dass der Kraftübertragungsteil die Baueinheit und den Fahrzeugkörper zusätzlich aussteift, was speziell für den Fahrzeugkörper eines zu Verwindungen neigenden Cabriolets günstig ist. Hierbei ist der Kraftübertragungsteil eine Kassette für wenigstens einen Überrollbügel, die die Kräfte großflächig aufnimmt, überträgt und in den Boden einleitet, und ist die Baueinheit an der zum Fahrzeugheck weisenden Rückseite der Querwand installiert.

Zur Gewichtseinsparung ist die Kassette zweckmäßigerweise ein Faserverbund-Kunststoffformteil. Die Kassette ist aus diesem Werkstoff mit beliebiger Querschnittsform und frei wählbarem Querschnittsverlauf einfach herstellbar, hochfest, und dabei extrem leicht.

Die Kassette lässt sich mit minimalem Materialeinsatz mit durchgehendem U-Querschnitt belastungsgerecht ausbilden.

Dabei verläuft der U-Querschnitt durchgehend mit in etwa gleichbleibender Höhe oder nimmt die Höhe in Richtung zum Fahrzeugkörper-Boden, vorzugsweise unter Ausbildung eines Fußteils, zu. Der Fußteil bietet im Falle eines Überschlags den Vorteil einer großflächigen Kraftübertragung und stabilen Abstützung der gesamten Baueinheit gegen den Boden. Um bei jedem Überrollbügel gleiche Kraftübertragungsverhältnisse zu erzielen, sollte jeder Überrollbügel von einer Kassette abgedeckt sein.

Um einen stabilen Verbund zu schaffen, wird die Kassette am Modulträger, an der Querwand und am Fahrzeugkörper-Boden festgelegt, und zwar mit jeweils zweckmäßigen Fügeverfahren.

Es ist sogar möglich, die Kassetten quer zur Fahrzeuglängsrichtung miteinander zu verstreben, obwohl baulich voneinander getrennte, nicht verbundene Kassetten ausreichen und dann mehr Gewicht gespart wird.

Zweckmäßig wird die Kassette von unten in den Modulträger eingeführt und darin mit dem Modulträger und/oder der Querwand verbunden. Die Kassette dient in diesem Bereich zur Gleitführung des Überrollbügels, kann Komponenten des Verriegelungsmechanismus enthalten, die den ausgefahrenen Überrollbügel blockieren, und nimmt die Kräfte direkt dort auf, wo sie vom Überrollbügel abgegeben werden.

Baulich einfach hat die Kassette an ihren U-Schenkelrändem Befestigungsflansche oder Befestigungsdome, mit denen sie an der Querwand bequem zu befestigen ist.

Im Hinblick auf die wirksame Kraftübertragung und die Gewichtseinsparung sollten zumindest die Eckbereiche des U-Querschnitts der Kassette eine größere Wandstärke besitzen, als angrenzende Wandbereiche, um beispielsweise integrierte Druckstreben zu formen, wobei gegebenenfalls die Randbereiche der Rückwand als erhabene und verstärkte Rippen ausgebildet sind.

Alternativ könnte auch in den U-Schenkeln und in den Eckbereichen die Wandstärke größer sein als im Rückwandbereich, um so viel Gewicht wie möglich zu sparen.

Um Beulverformungen im relativ dünnwandigen Rückwandbereich zu vermeiden, sollten eingeformte Verstärkungssicken zur Versteifung vorgesehen sein, beispielsweise sich X-förmig überkreuzende Sickenpaare.

Die Kassette kann im Höhenverlauf vom Modulträger zum Fahrzeugkörper-Boden mit variierender Wandstärke ausgebildet werden, z.B. biegemomentengerecht. Abhängig vom jeweiligen Einsatzfall könnte die Wandstärke im Bereich des Modulträgers größer sein als in der Nähe des Bodens, oder umgekehrt, oder dazwischen.

Um mit minimalem Materialeinsatz auch höchsten Belastungen gerecht zu werden, sollten die Faserverbund-Kunststoffformteile Endlosglasfasern in einer Polypropylenmatrix enthalten, wobei zweckmäßig jeweils die Hauptfaserrichtung zumindest weitgehend in der Formteil-Längsrichtung verläuft. Die Glasfasern können in Geweben oder unidirektionalen Gelegen enthalten sein. Speziell die Materialpaarung Endlosglasfasern/Polypropylenmatrix ist optimal für den Einsatz in solchen Schutzvorrichtungen geeignet.

Die Kassette kann, um die Montage an den jeweiligen Einsatzfall rationell anpassen zu können, durch Verschrauben, Clinchen, Vernieten, Verschweißen oder Verkleben festgelegt werden. Diese Verbindungsarten können auch wahlweise miteinander kombiniert werden.

Abhängig vom Fahrzeugtyp kann die Querwand fester Bestandteil des Fahrzeugkörpers sein, an den die Baueinheit angebaut wird, oder ist die Querwand Bestandteil der Baueinheit und wird mit dieser gemeinsam im Fahrzeugkörper montiert. Dabei braucht die Querwand nicht notwendigerweise eine Blechwand mit Versteifungsstrukturen zu sein, sondern die Querwand kann durchaus ebenfalls ein Faserverbund-Kunststoffformteil sein.

Eine besonders gute Kraftübertragung in das Fahrzeug ergibt sich, wenn der Fahrzeugkörper-Boden im Abstützbereich der Kassette eine hohle Querträger-Struktur aufweist. Diese Querträgerstruktur kann auch aus anderen, fahrzeugbedingten Gründen zweckmäßig sein. Zusätzlich ermöglicht die erhabene hohle Querträgerstruktur eine kurz bauende die Kassette.

Die Kassette kann bereits bei ihrer Herstellung für Zusatzaufgaben vorbereitet werden. Denn Faserverbundkunststoff erlaubt problemlose Formvielfalt. So kann die Kassettenoberfläche energieaufzehrend ausgebildet sein, z.B. mit einer Auflage, die sowohl eine optisch ansprechende Teilauskleidung im Kofferraum ist und das Überrollsystem vor Schaden durch aufschlagende Gegenstände im Kofferraum schützt, oder so geformt sein, dass sie die Rücksitzlehne(n) bildet oder trägt.

Anhand der Zeichnungen werden Ausführungsformen des Erfindungsgegenstandes erläutert. Es zeigen:
- Fig. 1: eine schematische Seitenansicht eines PKW-Cabriolets mit eingebauter Sicherheitsvorrichtung,
- Fig. 2: eine schematische Seitenansicht der Sicherheitsvorrichtung,
- Fig. 3: eine perspektivischer Schemaansicht eines Teils des Fahrzeugkörpers mit eingebauter Sicherheitsvorrichtung, in Blickrichtung vom Heckbereich des Fahrzeugs, und
- Fig. 4: einen schematischen Schnitt in der Schnittebene IV-IV in Fig. 3.

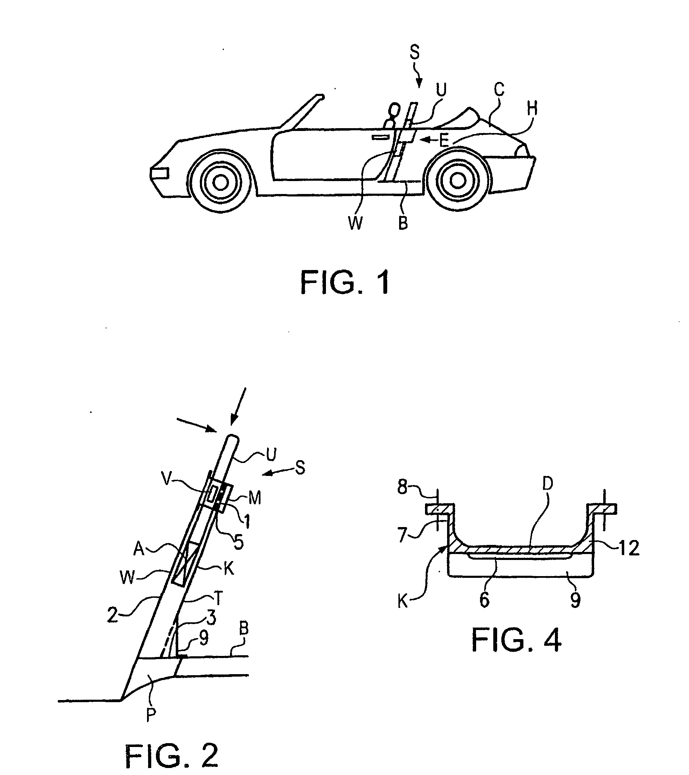

Das in Fig. 1 schematisch gezeigte PKW-Cabriolet C (zwei- oder viersitzig) weist einen Fahrzeugkörper H auf, in welchem hinter Fahrzeugsitzen bei einer Querwand W eine Sicherheitsvorrichtung S für die Insassen im Falle eines Fahrzeug-Überschlags eingebaut ist. Die Sicherheitsvorrichtung S enthält zwei in Fahrzeugquerrichtung nebeneinander hinter den Fahrzeugsitzen angeordnete Überrollbügel U, die auf bekannte Weise aus einer in ausgezogenen Linien gezeigten Bereitschaftsstellung nach oben in eine gestrichelt angedeutete Crash-Stellung ausfahrbar sind. Die Sicherheitsvorrichtung S umfasst eine Baueinheit, die an der Querwand W oder mit der Querwand W in den Fahrzeugkörper C installiert und, wie später erläutert wird, kraftübertragend mit dem Fahrzeugkörper-Boden B verbunden oder an diesem abgestützt ist.

Dem Design des jeweiligen Fahrzeugtyps entsprechend kann die Sicherheitsvorrichtung in etwa vertikal oder in Schräglage eingebaut sein, und hinter den Vordersitzen bzw. hinter den Rücksitzen.

In Fig. 2 ist die Sicherheitsvorrichtung S z.B. an der Rückseite (an der dem Fahrzeugheck zugewandten Seite) der Querwand W eingebaut. Sie könnte auch an deren Vorderseite installiert werden. Die Sicherheitsvorrichtung S weist einen Modulträger M aus Faserverbund-Kunststoff auf, der sich im oberen Bereich der Querwand quer zur Fahrzeuglängsrichtung erstreckt, und sowohl mit der Querwand W als auch Seitenteilen des Fahrzeugkörpers kraftübertragend verbunden ist. Der Modulträger M bildet zusammen mit der Querwand W eine Aufnahme und Führung für die Überrollbügel U, die sich nach unten über den Modulträger M hinaus erstrecken. Der Modulträger M ist durch einen Kraftübertragungsteil T zusätzlich direkt gegen den Fahrzeugkörper-Boden B abgestützt. Der Kraftübertragungsteil T ist wenigstens eine Kassette K aus Faserverbund-Kunststoff, vorzugsweise aus Endlos-Glasfasern in einer Polypropylenmatrix mit Hauptfaserrichtung von oben nach unten. Die Kassette K ist von unten in den Modulträger M durch eine Öffnung 5 eingeführt und beispielsweise bei 1 mit dem Modulträger M und/oder der Querwand W kraftübertragend verbunden. Im Modulträger M, und insbesondere im oberen Ende der Kassette K, könnten übliche Verriegelungsvorrichtungen V vorgesehen sein, die die ausgefahrenen Überrollbügel U in der Crash-Position verriegeln. Im Inneren der Kassette, die einen Bewegungsführung für den Überrollbügel U bildet, können übliche Antriebs- und Sensorik-Komponenten A zum Ausfahren des Überrollbügels U geborgen untergebracht sein. Die Kassette ist ferner mit der Querwand W verbunden, beispielsweise in Befestigungsstellen 2, und wird zweckmäßigerweise auch mit dem Fahrzeugkörper-Boden B verbunden, z.B. in Befestigungsstellen 3. Der Fahrzeugkörper-Boden kann im Abstützbereich der Kassette K angehoben und als Hohl-Querträgerstruktur P ausgebildet sein.

Die Kassette K hat einen durchgehenden U-Querschnitt (in Fig. 4 angedeutet), der gemäß Fig. 2 in etwa mit gleichbleibender Höhe vom Modulträger M bis zum Boden B verläuft (gestrichelt angedeutet), oder im unteren Bereich mit zunehmender Höhe gestaltet ist, um einen ausgeprägten, für eine stabile Abstützung sorgenden Fußteil 9 zu formen.

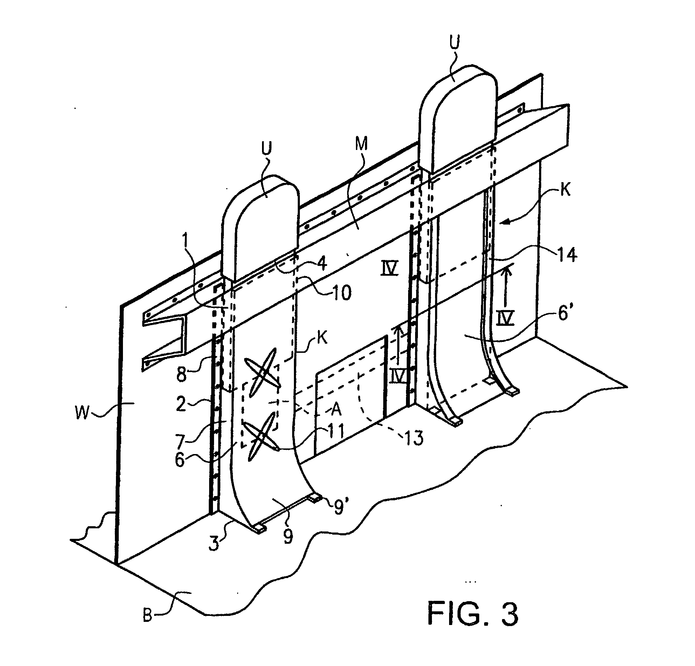

In der Perspektivansicht in Fig. 3 sind die beiden Kassetten in ausgezogenen Linien jeweils mit einem Fußteil 9 dargestellt. Die Version der Kassetten mit gleichbleibender Höhe ist strichliert in Fig. 3 rechts angedeutet.

Jede Kassette K hat einen im Wesentlichen ebenen Rückwandbereich 6, der relativ dünnwandig ist und deshalb gegebenenfalls durch eingeformte Sicken, z.B. die X-förmig angeordneten Sicken 11, versteift wird, seitliche U-Schenkelwandbereich 7, und daran angeformte Befestigungsflansche 8 oder (nicht dargestellt) mehrere einzelne Befestigungsdome, in denen die Befestigungsstellen 2 mit der Querwand W angeordnet werden. Der Fußteil kann nach hinten stehende Befestigungslaschen 9' besitzen. Das im Modulträger M innen festgelegte obere Ende der Kassette K ist mit 10 angedeutet.

Gemäß Fig. 4 kann es zweckmäßig sein, in den Eckbereichen 12 des U-Querschnitts der Kassette größere Materialanhäufungen vorzusehen, um sozusagen integrierte Druckstreben einzuformen, während die Wandstärke im Rückwandbereich 6 relativ dünn ist. Auch die U-Schenkel-Wandbereiche 7 können mit größerer Wandstärke ausgebildet werden, als der Rückwandbereich 6.

In Fig. 3 ist gestrichelt angedeutet, dass die beiden Kassetten K miteinander in Querrichtung durch Verbindungsstreben 13 verbunden sein können. Aus Gewichtsgründen empfiehlt es sich, die Kassetten K baulich voneinander zu trennen.

Die in Fig. 3 rechte Kassette K ist als mögliche Alternative so gestaltet, dass die Ränder des Rückwandbereiches 6' ausgeprägte Längsrippen 14 bilden, sozusagen integrierte Druckstreben.

Durch die kraftschlüssig zwischen dem Modulträger M, der Querwand W und dem Fahrzeugkörper-Boden B integrierten Kassetten K werden zusätzliche Lastübertragungspfade in den Boden und die Querwand W geschaffen, die bei einem Überschlag tragen, und auch bei normalem Fahrbetrieb den Fahrzeugkörper nennenswert versteifen. Die über diese zusätzlichen Lastübertragungspfade abgeleiteten Kräfte können den Modulträger M nicht nennenswert auf Torsion beanspruchen, so dass er nur mehr auf Biegung beansprucht wird. Dies ermöglicht es, den eine Hauptkomponente der Baueinheit E bildenden Modulträger M relativ grazil und damit leicht auszubilden. Diese Gewichtseinsparung beim Modulträger ist höher ist als das zusätzliche Gewicht der Kassetten K. Mit der erfindungsgemäßen Sicherheitsvorrichtung lassen sich unter Verwendung von Faserverbund-Kunststoff für die Überrollbügel U, den Modulträger M und die Kassetten K gegenüber einer herkömmlichen Bauweise aus Metall oder Leichtmetall-Strangpressprofilen mehrere Kilogramm einsparen, obwohl der erzielbare Sicherheitsstandard im Crashfall mindestens gleichwertig, eher sogar noch besser ist.

Die Kassette K lässt sich aus Faserverbund-Kunststoff aus Prepregs im Heißpressverfahren kostengünstig und mit großer Formungsfreiheit ausbilden, wobei alle für die verschiedenen Funktionen der Kassette notwendigen baulichen Merkmale in einem Zug formbar sind. Die Wandstärke der Kassette kann in Hochrichtung gleichbleibend gewählt sein. Es ist jedoch auch möglich, die Wandstärke in Hochrichtung zu variieren, um die Kassette an die Belastungssituation optimal so anzupassen, dass mit minimalem Materialeinsatz eine optimale Belastungsübertragung sichergestellt ist. Weist die Kassette K zum Kofferraum, dann kann sie bei der Formung vorbereitet und/oder mit einer Auflage, ähnlich oder gleich der Kofferraum-Auskleidung versehen sein. Die Auflage kann energieaufzehrend gestaltet sein, um das Überrollsystem gegen Schäden aus harten Aufschlägen von Gegenständen im Kofferraum zu schützen. Weist die Kassette nach vorne, dann könnte sie zur Gewichts- und Platzersparnis gleich als Aufnahme der Rücksitzlehne(n) dienen oder die Rücksitzlehne(n) bilden.

## Patentansprüche

1. Schutzvorrichtung (S) für die Insassen eines PKW-Cabriolets (C), die eine an einer Seite einer Fahrzeugkörper-Querwand (W) anbringbare, überwiegend Faserverbund-Kunststoff-Formteile aufweisende Baueinheit (E) umfasst, in welcher zwei ausfahrbare Überrollbügel (U) zwischen einem sich im oberen Querwandbereich quer zur Fahrzeuglängsrichtung erstreckenden Faserverbund-Kunststoff Modulträger (M) und der Querwand (W) positioniert sind, wobei der Modulträger (M) mit der Querwand (W) und dem Fahrzeugkörper (H) kraftübertragend verbindbar ist, **dadurch gekennzeichnet, dass** der Modulträger (M) zusätzlich über wenigstens einen durch eine wenigstens einen Überrollbügel (U) enthaltende Kassette (K) gebildeten Kraftübertragungsteil (T) direkt am Fahrzeugkörper-Boden (B) abstützbar ist.

2. Schutzvorrichtung nach Anspruch 1, **dadurch gekennzeichnet, dass** die Kassette (K) ein Faserverbund-Kunststoffformteil ist.

3. Schutzvorrichtung nach Anspruch 1, **dadurch gekennzeichnet, dass** die Kassette (K) mit von oben nach unten durchgehendem U-Querschnitt ausgebildet ist.

4. Schutzvorrichtung nach Anspruch 3, **dadurch gekennzeichnet, dass** der U-Querschnitt entweder zumindest in etwa gleichbleibende Höhe oder in Richtung zum Fahrzeugkörper-Boden (B), vorzugsweise unter Ausbildung eines Fußteils (9), zunehmende Höhe besitzt.

5. Schutzvorrichtung nach Anspruch 1, **dadurch gekennzeichnet, dass** für jeden Überrollbügel (U) eine Kassette (K) vorgesehen ist, vorzugsweise als dreiseitige Abdeckung des nach unten über den Modulträger überstehenden Überrollbügels (U), und zugehöriger mechanischer und/oder elektromechanischer und/oder elektronischer Einrichtungen des Überrollsystems.

6. Schutzvorrichtung nach Anspruch 1, **dadurch gekennzeichnet, dass** die Kassette (K) am Modulträger (M), an der Querwand (W) und am Fahrzeugkörper-Boden (B) festlegbar ist.

7. Schutzvorrichtung nach Anspruch 5, **dadurch gekennzeichnet, dass** beide Kassetten (K) quer zur Fahrzeuglängsrichtung über wenigstens eine Verstrebung (13) miteinander verbunden oder baulich voneinander getrennt sind.

8. Schutzvorrichtung nach Anspruch 1, **dadurch gekennzeichnet, dass** sich die Kassette (K) zu innenliegenden Verbindungsbereichen (1) mit zumindest dem Modulträger (M) in den Modulträger (M) hineinerstreckt.

9. Schutzvorrichtung nach Anspruch 1, **dadurch gekennzeichnet, dass** die Kassette (K) an der Querwand (W) mit ihren U-Schenkelrändem, vorzugsweise mit dort eingeformten Befestigungsflanschen (8) oder Befestigungsdomen, festlegbar ist.

10. Schutzvorrichtung nach Anspruch 3, **dadurch gekennzeichnet, dass** zumindest in den Eckbereichen (12) des U-Querschnitts der Kassette (K) die Wandstärke größer ist als in angrenzenden Wandbereichen (6', 6, 7), und dass, vorzugsweise, Ränder eines Rückwandbereichs (6') als erhabene Rippen (14) ausgebildet sind.

11. Schutzvorrichtung nach Anspruch 3, **dadurch gekennzeichnet, dass** in den U-Schenkel-Wandbereichen (7) und in den Eckbereichen (12) des U-Querschnitts die Wandstärke größer ist als in einem die Eckbereiche verbindenden Rückwandbereich (6, 6').

12. Schutzvorrichtung nach Anspruch 10 oder 11, **dadurch gekennzeichnet, dass** der Rückwandbereich (6, 6') eingeformte Verstärkungssicken aufweist, vorzugsweise jeweils einander X-förmig überkreuzende Sickenpaare.

13. Schutzvorrichtung nach Anspruch 1, **dadurch gekennzeichnet, dass** die Wandstärke der Kassette (K) in Richtung vom Modulträger (M) zum Fahrzeugkörper-Boden (B) variiert, vorzugsweise mit einem biegemomentgerechten Verlauf.

14. Schutzvorrichtung nach wenigstens einem der vorhergehenden Ansprüche, **dadurch gekennzeichnet, dass** die Faserverbund-Kunststoff-Formteile wie der Modulträger (M), die Kassetten (K), und die Überrollbügel (U) Endlosglasfasern in einer Polypropylenmatrix enthalten, vorzugsweise jeweils mit der Hauptfaserrichtung zumindest weitgehend entsprechend der Formteil-Längsrichtung.

15. Schutzvorrichtung nach Anspruch 1, **dadurch gekennzeichnet, dass** die Kassette (K) durch Verschrauben, Clinchen, Vemieten, Verschweißen oder Verkleben festlegbar ist.

16. Schutzvorrichtung nach Anspruch 1, **dadurch gekennzeichnet, dass** die Querwand fester Bestandteil des Fahrzeugkörpers (H) und die Baueinheit (E) an diese anbaubar ist.

17. Schutzvorrichtung nach Anspruch 1, **dadurch gekennzeichnet, dass** die Querwand (W) Bestandteil der Baueinheit (E) und mit dieser im Fahrzeugkörper (H) festlegbar ist.

18. Schutzvorrichtung nach Anspruch 1, **dadurch gekennzeichnet, dass** der Fahrzeugkörper-Boden (B) im Abstützbereich der Kassette (K) eine hohle Querträger-Struktur (8) aufweist.

19. Schutzvorrichtung nach einem der vorhergehenden Ansprüche, **dadurch gekennzeichnet, dass** der Rückwandbereich (6, 6') der oder die Kassette (K) bei an der Rückseite der Querwand (W) installierter Baueinheit mit einer Aufschlagenergie dämpfenden Auflage versehen ist, insbesondere für im Kofferraum befindliche Gegenstände.

20. Schutzvorrichtung nach einem der vorhergehenden Ansprüche, **dadurch gekennzeichnet, dass** der Rückwandbereich (6, 6') der Kassette (K) bei an der Vorderseite der Querwand (W) installierter Baueinheit als Aufnahme und/oder Träger wenigstens einer Rücksitzlehne ausgebildet ist.

## Claims

1. Protection device (S) for the passengers of a convertible car (C), comprising a structural unit (E) which is to be mounted on one side of a vehicle body lateral bulkhead (W) and which at least predominantly includes moulded parts of fibre composite plastic material, two extendible rollover bars (U) positioned in the structural unit (E) between the lateral bulkhead (W) and a module beam (M) extending crosswise to the longitudinal direction of the vehicle in an upper region of the lateral bulkhead (W), the module beam (M) being connectable in a force transmitting fashion with the lateral bulkhead (W) and the vehicle body (H), **characterised in that** the module beam (M) additionally is supported directly at the vehicle body bottom (B) via at least one force transmission part (T) formed by a cassette (K) containing at least one rollover bar (U)..

2. Protection device as in claim 1, **characterised in that** the cassette (K) is a moulded part made of fibre composite plastic material.

3. Protection device as in claim 1, **characterised in that** the cassette (K) is formed with a U-cross-section continuously extending from the top to the bottom.

4. Protection device as in claim 3, **characterised in that** the U-cross-section either has at least substantially uniform height or increasing height in the direction towards the vehicle body bottom (B), preferably to form a foot part (9).

5. Protection device as in claim 1, **characterised in that** one cassette (K), is provided for each rollover bar (U), preferably in the form of a three-sided cover of the rollover bar (U) which extends downwardly beyond the module beam (M), the cassette (K) also serving as a cover for associated mechanical and/or electromechanical and/or electronic equipment of the rollover system.

6. Protection device as in claim 1, **characterised in that** the cassette (K) is mounted to the module beam (M), to the lateral bulkhead (W) and to the vehicle body bottom (B).

7. Protection device as in claim 5, **characterised in that** both cassettes (K) are connected to each other in lateral direction of the vehicle by means of at least one strut arrangement (13) or are structurally separated from each other.

8. Protection device as in claim 1, **characterised in that** the cassette (K) extends into the inside of the module beam (M) and towards interior connection locations (1) at least with the module beam (M).

9. Protection device as in claim 1, **characterised in that** the cassette (K) is secured to the lateral bulkhead (W) at edges of the U-legs of the U-cross-section, preferably by means of fixation flanges (8) or fixation domes formed at the U-leg edges.

10. Protection device as in claim 3, **characterised in that** the wall thickness at least in the comer portions (12) of the U-cross-section of the cassette (K) is larger than in adjacent wall regions (6', 6, 7), and that, preferably, longitudinal edges of a rear wall portion (6') are formed as protruding ribs (14).

11. Protection device as in claim 3, **characterised in that** the wall thickness is larger in the U-leg wall portions (7) and in the corner sections (12) of the U-cross-section than in the rear wall portion (6, 6') interconnecting the corner sections.

12. Protection device as in claim 10 or 11, **characterised in that** the rear wall portion (6, 6') is provided with moulded enforcing beads (11), preferably with bead pairs in X arrangements.

13. Protection device as in claim 1, **characterised in that** the wall thickness of the cassette (K) varies in a direction from the module beam (M) towards the vehicle body bottom (B), preferably with a variation adapted to expected bending stresses.

14. Protection device as in at least one of the preceding claims, **characterised in that** the fibre composite plastic material moulded parts like the module beam (M), the cassettes (K) and the rollover bars (U) contain endless glass fibres in a matrix of polypropylene, preferably with a main fibre direction at least substantially corresponding to the longitudinal direction of the moulded part.

15. Protection device as in claim 1, **characterised in that** the cassette (K) is fixed by threaded connections, clinching connections, rivet connections, welding or gluing.

16. Protection device as in claim 1, **characterised in that** the lateral bulkhead (W) is a fixed component of the vehicle body (H), and that the structural unit (E) is mounted to the lateral bulkhead.

17. Protection device as in claim 1, **characterised in that** the lateral bulkhead (W) is a component of the structural unit (E) and is mounted together with the structural unit (E) in the vehicle body (H).

18. Protection device as in claim 1, **characterised in that** the vehicle body bottom (B) has a hollow lateral beam structure (8) in the suspension area of the cassette (K).

19. Protection device as in at least one of the preceding claims, **characterised in that** in case of the structural unit (E) installed at the rear side of the lateral bulkhead (W) either the rear wall portion (6, 6') of the cassette or the cassette (K) is provided with an overlay for dissipating impact energy, particularly as a protection against damages by objects stored in the trunk of the vehicle.

20. Protection device as in at least one of the preceding claims, **characterised in that** in case of the structural unit (E) installed at the front side of the lateral bulkhead (W) the rear wall portion (6, 6') of the cassette (K) is formed as a carrier and/or backup of a rear seat backrest.

## Revendications

1. Dispositif de protection (S) pour les passagers d'un cabriolet automobile (C), dispositif comprenant un ensemble de construction (E) pouvant être rapporté sur un côté d'une paroi transversale (W) de carrosserie de véhicule, présentant majoritairement des pièces moulées en matière plastique composite comprenant des fibres, ensemble de construction dans lequel deux arceaux de sécurité (U) déployables sont positionnés entre un support de module (M) en matière synthétique composite renforcée par des fibres, s'étendant dans la zone de paroi transversale supérieure, transversalement à la direction longitudinale du véhicule, et la paroi transversale (W), le support de module (M) étant susceptible d'être relié avec transmission d'efforts à la paroi transversale (W) et à la carrosserie du véhicule (H), **caractérisé en ce que** le support de module (M), en plus, est susceptible de prendre appui, par l'intermédiaire d'au moins une partie de transmission de force (T) formée par une cassette (K) contenant au moins un arceau de sécurité (U), directement sur le fond ou plancher (B) de la carrosserie du véhicule.

2. Dispositif de protection selon la revendication 1, **caractérisé en ce que** la cassette (K) est une pièce moulée en matière synthétique composite renforcée par des fibres.

3. Dispositif de protection selon la revendication 1, **caractérisé en ce que** la cassette (K) est réalisée avec une section transversale en U, continue du haut vers le bas.

4. Dispositif de protection selon la revendication 3, **caractérisé en ce que** la section transversale en forme de U soit est au moins d'une hauteur à peu près constante, soit est d'une hauteur allant en augmentant en allant en direction du plancher (B) de carrosserie d'automobile, de préférence en formant une partie de pied (9).

5. Dispositif de protection selon la revendication 1, **caractérisé en ce que**, pour chaque arceau de sécurité en forme de U, (U), est prévue une cassette (K), se présentant de préférence sous la forme d'un recouvrement sur trois côtés de l'arceau de sécurité (U) en saillie vers le bas sur le support de module, et des équipements mécaniques et/ou électromécaniques et/ou électroniques afférents, appartenant au système d'arceau de sécurité.

6. Dispositif de protection selon la revendication 1, **caractérisé en ce que** la cassette (K) est susceptible d'être fixée sur le support de module (M), sur la paroi transversale (W) et sur le plancher de carrosserie de véhicule (B).

7. Dispositif de protection selon la revendication 5, **caractérisé en ce que** les deux cassettes (K) sont reliées l'une à l'autre ou séparées l'une de l'autre du point de vue de la construction, transversalement par rapport à la direction longitudinale du véhicule, par l'intermédiaire d'au moins un entretoisement (13).

8. Dispositif de protection selon la revendication 1, **caractérisé en ce que**, aux zones de liaison (1) intérieures munies d'au moins le support de module (M), la cassette (K) s'étend dans le support de module (M).

9. Dispositif de protection selon la revendication 1, **caractérisé en ce que** la cassette (K) est susceptible d'être fixée sur la paroi transversale (W) par ses bords de branche de U, de préférence comprenant des rebords de fixation (M) ou des dômes de fixation y étant creusés.

10. Dispositif de protection selon la revendication 3, **caractérisé en ce que**, au moins dans les zones d'angle (12) de la section transversale en U de la cassette (K), l'épaisseur de paroi est supérieure à ce qu'elle est dans les zones de paroi (6', 6, 7) limitrophes, et **en ce que**, de préférence, des bords d'une zone de paroi arrière (6') sont conformés en nervures (14) en relief.

11. Dispositif de protection selon la revendication 3, **caractérisé en ce que**, dans les zones de paroi de branches de U (7) et dans les zones d'angle (12) de la section en forme de U, l'épaisseur de paroi est supérieure à ce qu'elle est dans une zone de paroi arrière (6,6') reliant les zones d'angle.

12. Dispositif de protection selon la revendication 10 ou 11, **caractérisé en ce que** la zone de paroi arrière (6,6') présente des moulures de renforcement creusées tridimensionnelles, de préférence chaque fois des paires de moulure se croisant l'une l'autre en forme de X.

13. Dispositif de protection selon la revendication 1, **caractérisé en ce que** l'épaisseur de paroi de la cassette (K), dans la direction du support de module (M) vers le plancher de véhicule (B), varie de préférence avec une allure conforme aux couples de flexion.

14. Dispositif de protection selon au moins l'une des revendications précédentes, **caractérisé en ce que** les pièces moulées en matière synthétique composite renforcés par des fibres, tel que le support de module (M), les cassettes (K) et l'arceau de sécurité (U), contiennent des fibres de verre continues, dans une matrice polypropylène, dont de préférence chaque fois la direction principale des fibres correspond au moins largement à la direction longitudinale de la pièce moulée.

15. Dispositif de protection selon la revendication 1, **caractérisé en ce que** la cassette (K) est fixée par vissage, clinchage, rivetage, soudage ou collage.

16. Dispositif de protection selon la revendication 1, **caractérisé en ce que** la paroi transversale est un composant fixe de la carrosserie de véhicule (H) et l'ensemble de construction (E) est susceptible d'être raccordé par montage sur celle-ci.

17. Dispositif de protection selon la revendication 1, **caractérisé en ce que** la paroi transversale (W) fait partie de l'ensemble de construction (E) et est susceptible d'être fixée à celle-ci dans la carrosserie de véhicule (H).

18. Dispositif de protection selon la revendication 1, **caractérisé en ce que** le plancher de carrosserie de véhicule (B) présente, dans la zone d'appui de la cassette (K), une structure support transversal (8) creuse.

19. Dispositif de protection selon une des revendications précédentes, **caractérisé en ce que** la zone de paroi arrière (6, 6') de la ou des cassettes (K), lorsque l'ensemble de construction est installé sur la face arrière de la paroi transversale (W), est munie d'un reposoir amortissant l'énergie d'impact, en particulier pour des objets se trouvant dans le coffre à bagages.

20. Dispositif de protection selon une des revendications précédentes, **caractérisé en ce que** la zone de paroi arrière (6, 6') de la cassette (K), lorsque l'ensemble de construction est installé sur la face avant de la paroi transversale (W), est réalisé sous la forme de logement et/ou de support d'au moins un dossier.
